# EUROPEAN PATENT APPLICATION

(11) **EP 2 154 678 A1**
(43) Date of publication of application: **17.02.2010**
(21) Application number: 08014400.9
(22) Date of filing: 13.08.2008
(51) Int. Cl.: G10L 15/26, A63F 13/02, A63F 13/10, G10L 15/06

(54) **Voice command game controlling apparatus and method of the same**

(71) Applicant: Weistech Technology Co., Ltd., Chung Ho 235 T'ai pei (TW)
(72) Inventor: Hsu, Wei, Chung Ho City 235 Taipei County (TW)
(74) Representative: Winkler, Andreas Fritz Ernst

(57) **Abstract**

The present invention discloses a voice command game controlling apparatus and method which can activate the game commands user predetermine by voice command. The device in present invention also allows user to create and configure their user-customized hot keys for video game playing. The voice command game controlling apparatus in present invention may allow users to edit and save their hot key list therein by using corresponding game controller or keyboard and output the game command signals to the game console connected therewith. The editable hot key content includes the designated hot key, controller used, command order, corresponding game title and game consoles. It is compatible with all kind of game platform including game consoles, PCs and their peripherals, thus it can accommodate to all existing video games. The apparatus also supports voice recognition function to allow user rapidly inputting their desire sentence for player interaction and communication.

## Description

### FIELD OF THE INVENTION

The present invention generally relates to an apparatus and method for configuring hot key functions for video games and outputting game control signals to game platforms, more particularly, relates to an apparatus and method for configuring hot keys for video games and outputting game control signals to game platforms via voice commands.

### DESCRIPTION OF THE PRIOR ART

Due to the booming of consumer electronic products and the prosperous development of digital content industry, video game has become a popular culture in current mass recreation. In the past, video games, for example, TV games and PC games, and their related peripherals are merely secondary, low-value merchandise, which can not rival with other hot products, such as DVD player, MP3 player, digital camera or even HDTV. At one time, video game was also considered as an entertainment for children or teenagers traditionally which lacking of value added and development vision. Nowadays, in the aspect of game consoles, all new-released next generation game consoles are designed with the concept of household multimedia platform, which include the function of broadband internet, photo editing, DVD playing, and also provided with other useful accessories such as hard disk for data storage and management or optical fiber output to access high-quality digital sound. Furthermore, the new-released game consoles and corresponding gaming software can support HDTV specification to display high-resolution game graphic and content which imparts game player brand-new, significant game experience. On the other hand, as for the development of PC game, the online PC game has blossom into one of most popular game genre in this century. More and more video games are designed based on the online function and multi-player features. The greatest charm of the online game is the interaction with players on the server other than the single player operation. This new game genre and playing manner is revolutionizing the all gaming industry. Accordingly, the prosperity of gaming industry and the popularity of video game has promoted the development of periphery apparatus and extended the business of manufacturer.

In the operation of game, no matter PC game or TV game, their input method is limited to the combination of direction keys and function keys. There are various game command input devices, such as keyboard, gamepad, mouse, joystick or even a steering wheel. Every gaming software has its own appropriate input device. For some specific game genre, their game command is quite complicated. For example, in some real-time simulation (RTS) PC game, ex, the well-known Age of Empire and Warcraft, there are many command blocks on the in-game screen displayed. Player has to use mouse clicking command block to implement the action designated for said command block. The aforementioned action may be a moving order, a special skill, even to pop-up certain windows. Additionally, for some fighting genre software in game console, the game command is performed via a joystick which is designated to input very complicate key combination. For example, when player want to make in-game virtual character performing special ability or skill, they have to use joystick to input a consecutive key combination in seconds or in the situations, pressing several function buttons on input device at the same time, such as ┌→↓↘+A┘or ┌↓↙←↙↓↘→ + ABCD┘, which is very difficult for a beginner. Note that the symbols A, B, C, D and ←↙↓↘→ indicate the button A, B C, D (or key) and direction keys respectively on the input devices. Moreover, most game players play several video games at one time, and every game has its own command list or hot key setting, thus it is very difficult for the player to memorize a large number of command order or key combination.

Accordingly, many games have predetermined the hot key list to accommodate the operation of players. Hot key is usually a set of key combination and can be used to replace or modify the default input setting predetermined in the game to implement the desired game commands. In general, the activation of hot key is by hitting one specified key on the keyboard (or the button on game pad), i.e. hot key function can help users to complete multiple command input by the least physical action, ex, pressing only one key on the keyboard. In general, when a user initiates the game program on a personal computer, certain keys on the keyboard are configured to serve as hot keys of the game. However, different video games usually have different operating actions and hot key settings. Hot keys are generally in a large number and incompatible for different games. Therefore, it is inconvenient for the user to memorize and operate all hot keys corresponding to different games. Furthermore, for most online games or MMORPG, players may use keyboard to input characters to chat or communicate with other players. In this situation, keyboard not only serves as a hot key input devices to input computer game operating actions, but also as a standard keyboard to input standard characters for player interactions. Therefore, the function of allowing player to quickly switch and select their desired input modes of keyboard is another essential in the design of hot key, especially for the online game. Summarily, current hot key system for video game has some disadvantages: First, Most video game can not allow players customize or configure their own hot keys. Player can only use the default hot keys predetermined by the game designer, which is sometimes inconvenient and uncomfortable to players because the hot keys corresponding to different computer-game operating actions are usually randomly disposed in different areas of the keyboard and player are not allowed to create or configure their own personal hot key list for their frequently-performed action in game playing; Second, not all available video games supported or are provided with hot key feature, especially for most TV games, players usually input command via game controller (i.e. gamepad), which usually has no spare button for hot key specifying. Though there are some sharewares and program such as Auto Hotkey in PC system can allow users edit their hot key list and be applied to any PC games, they can not be installed on the game console or non-PC game platform to be implemented to perform the hot key function. Thus, the applicability of hot key is limited.

In addition, the operation of hot key in current gaming industry is limited to the key input, i.e. player will specify a key on the keyboard or a button on the controller as their hot key. Though this conventional method is convenient and effective, it is insufficient in some situation. For example, the number of button on game controller is less, there are no spared buttons for hot key use, and the hot keys player want to create are too many, it is not easy for players to memorize all hot key setting and their corresponding action. Therefore, it is desired to provide simpler and more intuitive hot key input method to improve the aforementioned disadvantages and impart better playing experience to user.

### SUMMARY OF THE INVENTION

The present invention provides a brand-new input method of hot key command to resolve the aforementioned problem, ex. user is not allowed to create and configure their personal hot key list, the hot key program and input devices in prior art can not be used on all kinds of game console or PC. In the present invention, a voice command game controlling apparatus is provided to receive the acoustic signal outside to activate the predetermined hot key function to perform the corresponding game commands or actions.

In addition, the game controlling apparatus in one embodiment of the present invention is also provided with capability of speech recognition. Speech recognition is a process which the acoustic signal received by audio acquisition devices (ex. microphone) is converted into a character sting by a voice recognition unit in computer. The recognized character string may then be used in a variety of computer software applications for purposes such as document preparation, data entry, command input, or even communicate with others.

One embodiment in present invention is provided with a voice command game controlling apparatus for utilizing voice command to implement hot key function, comprising: acquisition devices to acquire external voice signal; a processing unit coupled with said acquisition devices to process voice signal; a determination unit coupled with said processing unit can identify the similarity of two voice signals; a plurality of input devices to input game command; at least one input device to input game command; at least one input terminal to connect with said at least one input devices to receive the game command; a encoding unit coupled with said at least one input terminal to encode the inputted game command; at least one output terminal coupled with said encoding unit to output hot key command; a software driver unit coupled with said encoding unit to process encoded game command.

Another embodiment in present invention is provided with a method for utilizing voice command to implement hot key function, comprising the step of: utter a voice command to be registered in a command registration unit; input the desired key combination or game command corresponding to said voice command; save hot key setting in command registration unit; utter the voice command user want to perform; said voice command uttered by user is identified and compared with the registered voice command; and, if said voice command uttered by user matches said registered voice command, said desired key combination or game command corresponding to said voice command is execute; otherwise, said voice command uttered by user is ignored and aborted.

One object of present invention is to provide a hot key inputting device compatible with any game platforms.

Another object of present invention is to provide a hot key inputting device which allows user to create and modify their own hot key setting which is compatible with any game platform and game software, such as X-BOX, Play Station, Wii or other game consoles.

Another object of present invention is to provide a device which can activate the multiple game commands user creates via voice command.

Still another object of present invention is to provide a speech recognition device which can convert the voice signal uttered by user into a series character string to be used of.

The forgoing forms and other forms, objects, and aspects as well as features and advantages of the present invention will become further apparent from the following detailed description of the presently preferred embodiments, read in conjunction with the accompanying drawings. The detailed description and drawings are merely illustrative of the present invention rather than limiting the scope of the present invention being defined by the appended claims and equivalents thereof.

### BRIEF DESCRIPTION OF THE DRAWINGS

FIG. 1 illustrates the block diagram of the components of voice command game controlling apparatus in accordance with one embodiment of the present invention.
FIG. 2 illustrates the block diagram of the components of voice command game controlling device in accordance with another embodiment of the present invention
FIG. 3 illustrates the flowchart of configuring and registering the inputted voice command and game command in accordance with one embodiment of the present invention.
FIG. 4 illustrates the flowchart of activating a hot key function predetermined by user in accordance with one embodiment of the present invention.
FIG. 5 illustrates a schematic view of the voice command game controlling apparatus in accordance with one embodiment of the present invention.

### DESCRIPTION OF THE PREFERRED EMBODIMENT

The invention will now be described in greater detail with preferred embodiments of the invention and illustrations attached. Nevertheless, it should be recognized that the preferred embodiments of the invention is only for illustrating. Besides the preferred embodiment mentioned here, present invention can be practiced in a wide range of other embodiments besides those explicitly described, and the scope of the present invention is expressly not limited expect as specified in the accompanying Claims.

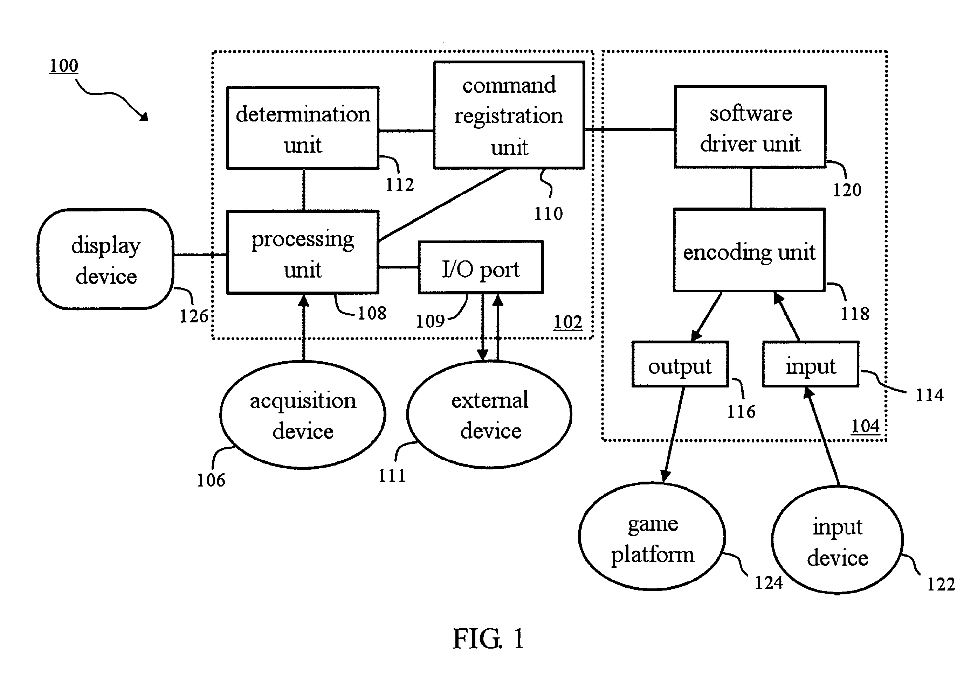

Referring now to FIG. 1, which illustrates components of voice command game controlling apparatus in accordance with one embodiment of the present invention. In FIG. 1, a voice command game controlling apparatus 100 is provided with two primary function modules, a voice processing module 102 and a game controlling module 104, which delineated with two dashed blocks in the figure. Voice processing module 102 is a section of circuitry designated to process, convert, and transmit the voice signals received from outside. In the present embodiment, voice processing module 102 is connected with an acquisition devices 106 which can receive the acoustic signals or the analog audio signals from outside. Acquisition devices 106 is generally a conventional voice input device such as a microphone, speakerphone, throat mic and the like. The acoustic signals uttered by users, for example, a word, a term, or even a sentence, may be received and inputted to the voice processing module 102 through the acquisition devices 106. A processing unit 108 in voice processing module 102 is coupled with said acquisition devices 106 and can manipulate the voice signals therefrom. Processing unit 108 may include a conventional audio circuitry having analog-to-digital converter to digitalize the received analog voice signal for later recognizing. The processing unit 108 is also coupled to a I/O port 109. Game controlling apparatus 100 may connect with a external device 111, ex. computer system, to transmit data. In the preferred embodiment of the present invention, processing unit 108 is couple with a command registration unit 110 which may be shared with another game controlling module 104 in the game controlling apparatus 100, which will be described in the following embodiments. One capability of the command registration unit 110 is to save the voice signals digitalized by processing unit 108. For this purpose, registration unit is generally a common memory unit, such as DRAM or flash. In the embodiment of present invention, users can choice the operation mode of game controlling apparatus 100 to selectively save digitalized voice signal. The voice signal registered in command registration unit 110 can serve as a voice command or voice sample which may be compared with other inputted voice signals in the identification process. For this operation, the voice processing module 102 is also provided with a determination unit 112 coupled with the processing unit 108 and the command registration unit 110 in voice processing module 102 to execute the identification. The determination unit 112 is a kind of signal comparator or similarity calculator used for comparing and identifying the similarity between two voice signals. When the game controlling apparatus 100 is in voice command mode, the voice signals digitalized by processing unit 108 is transmitted to the determination unit 112 instead of command registration unit 110. Then, the determination unit 112 identifies the voice signal received with the registered voice command in command registration unit 110 to check if any results matched. If similarity between two compared voice signals is within the tolerance range of identification, the voice signal uttered by user outside is valid and processing unit 108 may implement the function or action specified for said registered voice command by user. The above-described components and operations are parts of the implementation of the voice processing module 102 in the embodiment of present invention. The implementation of game controlling module 104 will be described and illustrated in the embodiment and accompanying drawing hereafter.

Referring still to FIG. 1, the dashed block in the right portion of figure is the game controlling module 104 of the present invention, which comprising: a plurality of input terminal 114 and output terminal 116, a encoding unit 118 coupled with said a plurality of input terminal 114 and output terminal 116, a software driver unit 120 coupled with the encoder 118 and command registration unit 110. In the embodiment of present invention, one or more than one input devices 122 may be connected to said a plurality of input terminal 114 on the voice command game controlling apparatus 100. The input devices 122, for example, a keyboard, gamepad, joystick and mouse, etc, can be operated by user to perform the intended gaming actions during game playing. In operation, the aforementioned input devices 122 may produce a series of input signals, i.e. game commands, to be transmitted to the game controlling apparatus 100 through cable. The game command received by input terminal 114 is subsequently transferred to an encoding unit 118 coupled with input terminal 114. The primary object of encoding unit 118 is to encode the input signal into a computer-executable signal which can be processed by the components in the game controlling module 104, ex. the software driver unit 120 coupled with the encoding unit 118. The encoding unit 118 must be provided with the capability to manipulate all kind of game command signal inputted because every game platform or game console has it own input/output signal format. And also, the encoding unit 118 must have the capability to output all kind of signal format used by various game platforms to perform the desired action in the game. Game command inputted by user may be encoded into a serial of scan code to be received by software driver unit 120 and then be transmitted to command registration unit 110 which is coupled with software driver unit 120. In the configuration mode, the scan code will be saved in command registration unit 110 as a predetermined hot key function. The hot key function may be a command of performing one or more than one in-game action, such as user using joystick to input ┌→↓↘ + A┘ in order. Of course, it may be a single game command like ┌A┘ or a combination of ┌A+ B┘. The A, B and →↓↘ indicate the button A, B (or key) and direction keys on the input devices 122 respectively.

In the embodiment of present invention, every hot key function has a corresponding voice command to activate it. When device is in configuration mode, user may be requested to input a voice command. The voice command inputted in this situation will be considered as a specified activation signal whose functionality is similar to the hot key in prior art. The operation of inputting a voice command is explicitly described in the forgoing paragraph in the embodiment related voice processing module 102, thus the detail is omitted here. When user utters a valid, registered voice command in voice command mode, software driver unit 120 in game controlling module 104 will retrieve the corresponding hot key function from command registration unit 110 and transmit it to the encoding unit 118. The hot key function is then encoded to a series of game command whose signal format depends on the game platform to execute. A plurality of game platforms 124 (ex. game console or PC) is connected with output terminal 116 on game controlling apparatus 100 and receive said activated game command to perform the desired gaming action. Alternatively, the voice command game controlling apparatus 100 may be provided with a display device 126, such as a displayer or a LCD panel, for user scrutinizing their hot key configuration.

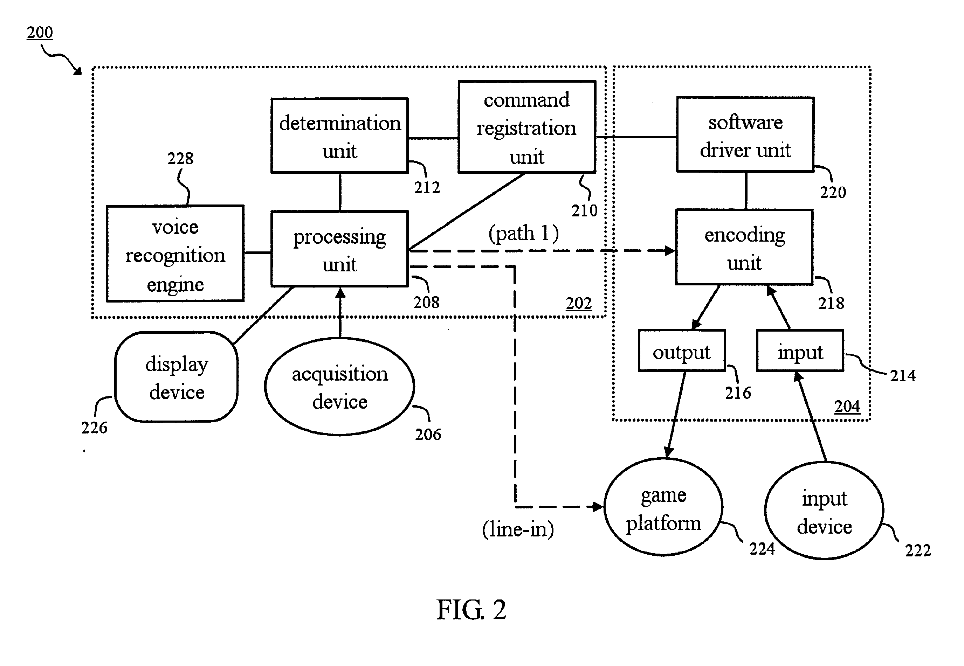

Referring now to FIG. 2, which illustrates components of voice command game controlling apparatus in the embodiment of present invention. The device arrangement in FIG. 2 is similar to the one in FIG. 1 except that the game controlling apparatus 200 in FIG.2 is additionally disposed with a voice recognition engine 228 coupled with processing unit 208. Conventionally, voice recognition engine 228 is implemented for speech recognition. The acoustic signal uttered by user in this embodiment can be a completed sentence or phrase including a plurality of word or term. In this embodiment, the analog audio signal received by the acquisition devices 206 is firstly converted to digital signal by processing unit 208, as described in the embodiment of FIG. 1. Then, the voice recognition engine 228 further recognizes the digital signals as a series of characters string. This approach can be achieved by voice recognition engine 207 coordinates with other recognition units, such as grammar application and embedded dictionary. The characters data extracted by voice recognition engine 228 can be transmitted directly to encoding unit 218 through path 1 without passing determination unit 212 and command registration unit 210. Subsequently, the data is encoded and outputted to the desired game platform 224. Consequently, the voice signal uttered by user is converted into characters and be displayed on the user's gaming screen or the one you want to communicate with. The approach in this embodiment has grant present invention more applicability. User is allowed to chose their intended operation mode depending on in-game occasion. For instance, in voice command mode, user can perform very complicated in-game actions by just uttering a specified, registered voice command. Alternatively, when there is a demand to communicate with other players in game, which is a common situation when playing on-line game, user can switch the operation mode to speech recognition mode and directly communicate with other players by voice expression. Moreover, in the embodiment of present invention, the processing unit 208 can be connected to the game platform through audio cable if said game platform supports audio line-in. That is, the voice signal can be transmitted to said game platform without any recognition or determination. This can be a very useful function when the game platform or software supports speech communication function, such as the Skype or MSN messenger internet communication in PC system.

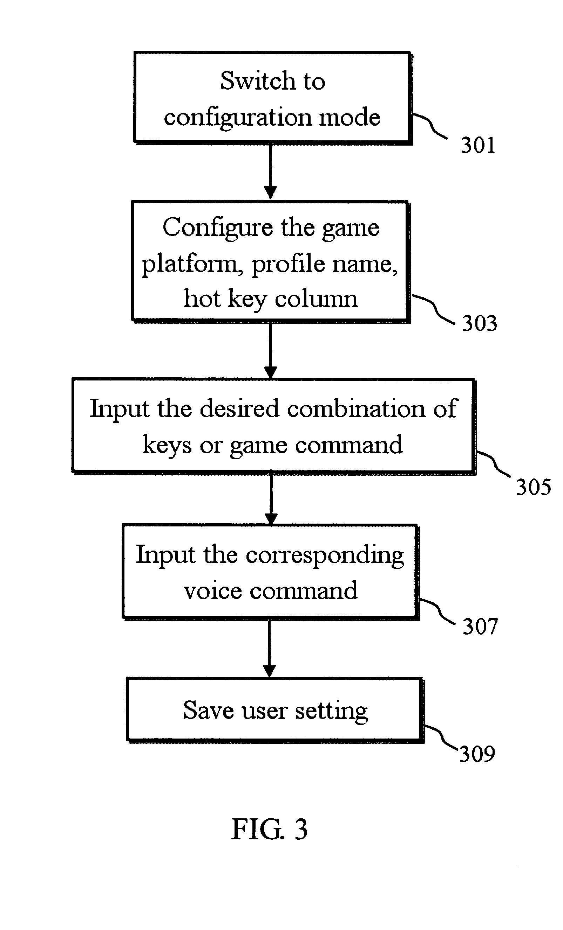

Referring now to FIG. 3, which illustrates the flow of configuring voice command and game hot key. As described in the foregoing embodiment, the voice command game controlling apparatus in present invention have several operation modes, comprising: the voice command mode which enables voice command to activate the hot key function, the configuration mode which allows user to modify registered hot key setting or create new one; the speech recognition mode which converts the inputted voice signals to a series of character string; and the communication mode which allows user to perform direct voice communication with others. At step 301, when users want to create new voice command hot key, the operation mode of controlling apparatus have to be switched to configuration mode first. Once the configuration mode is initial, user can configure their hot key setting through the display devices connected the device (step 303). In generally, hot key setting may include some information for user to edit and scrutinize. The hot key information in present invention preferably includes the game console to execute, hot key profile name, hot key column, and the key combination (i.e. multiple game commands). At the beginning of creating a hot key, user have to designate the game platform to execute, ex. PS3. Next, users have to create a hot key profile for which each profile may contain a plurality of hot key column to be registered, each registered hot key may occupies a hot key column in the hot key profile. Hot key profile is convenient function for user, it is like a user-customized list. For example, if user want to create a group of hot keys specified for the Microsoft game: Age of Empire, they can name the profile ┌Age of Empire┘ and create all hot keys in this profile. Thus when users play this game, they can load the profile setting and enable all hot key registered in this profile. After naming the profile, users have to chose a hot key column to edit, and in step 305, users will be asked to input their desired game commands, i.e. a combination of key or game command. For example, the user may use joystick inputting the game command ┌↓↘→ + ABCD┘, this command will be registered as a hot key information in one column of the hot key profile. Next, in step 307, user will be requested to input the voice signal used to activate the aforementioned ┌↓↘→+ABCD┘ command. For example, if user wants to use the term "shooting" to activate the registered game command ┌↓↘→ + ABCD┘, he may utter the sound "shooting" to be registered in the corresponding hot key column. The voice signal is inputted through conventional acquisition devices such as microphone or throat mic and will be used to activate the corresponding game command. Thereafter, in step 309, both the voice command and desired game command will be saved in the command registration unit in the device. Hereunto, the configuration is completed. Note that the ABCD and ↓↘→ symbols in present embodiment indicate the button A, B, C, D (or key) and the direction keys on the input devices respectively.

As far as the embodiment in FIG. 3, All of the voice hotkey items are configured by user and saved in the command registration unit 110 in game controlling apparatus 100, which includes game platform, hotkey name, hotkey combination, voice command and/or game command. In another embodiment of present invention, the voice hotkey items can also be a predetermined file configured by others (ex. game designer or other players). These hotkey files may be accessed by user of voice command apparatus via internet or other data transmission medium, and be loaded into the game controlling apparatus 100 through I/O ports. Similarly, the voice command items saved in the command registration unit 110 may also upload into an external device 111 through said I/O ports. The benefit of this function is for user to share their own hotkey files or use the one made by other players. Users no longer need to configure every voice hotkey for their use. For example, game designer may predetermine the voice hotkey files for those game commands in common use, and released them on the website for players to download. Game player may also upload their own voice hotkey files on the website or game forum for other players' use. User can install the downloaded voice hotkey files into game controlling apparatus 100 and use the corresponding voice command immediately in game playing. No voice command and articulation practice is needed. Also, it can improve the applicability of the apparatus.

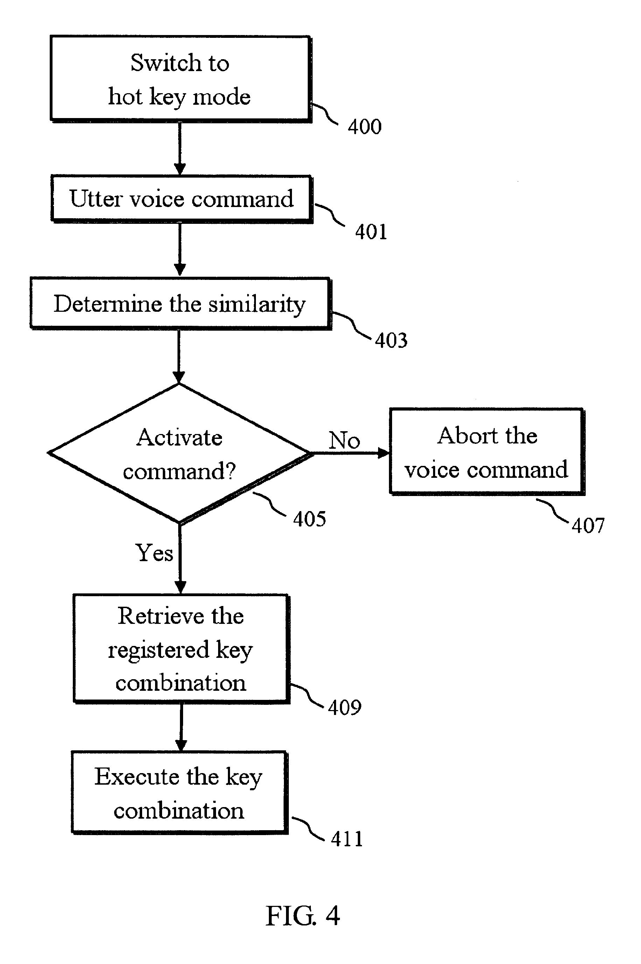

Referring to FIG. 4, which illustrates the flow of activating a hot key function predetermined by user. According to the embodiment in FIG. 3, it is assumed that the user has created a hot key which use voice command "shooting" to implement the game command ┌↓↘→ + ABCD┘, the voice command "shooting" and game command ┌↓↘→ + ABCD┘ are both registered in command registration unit. First, in step 400, if user wants to enable the voice command to control the in-game action, he has to switch the operation method of device to voice command mode. Next, user utters a voice command "shooting" in step 401. This voice command will be digitalized and transmitted to the determination unit in voice processing module. In the next step 403, determination unit identifies the similarity between the inputted voice command and the registered voice command saved in command registration unit. Subsequently, in step 405, if the similarity is over the tolerance range of identification, the inputted voice command will be ignored and aborted (in step 407). On the other hand, if the similarity is within the range of tolerance, the processing unit may retrieve the registered key combinations or game commands corresponding to said voice command from the registration unit in step 409. Finally, in step 411, the retrieved game command signals will be encoded into the controlling signal format of game platform to execute. Hereupon, the hot key activation is completed.

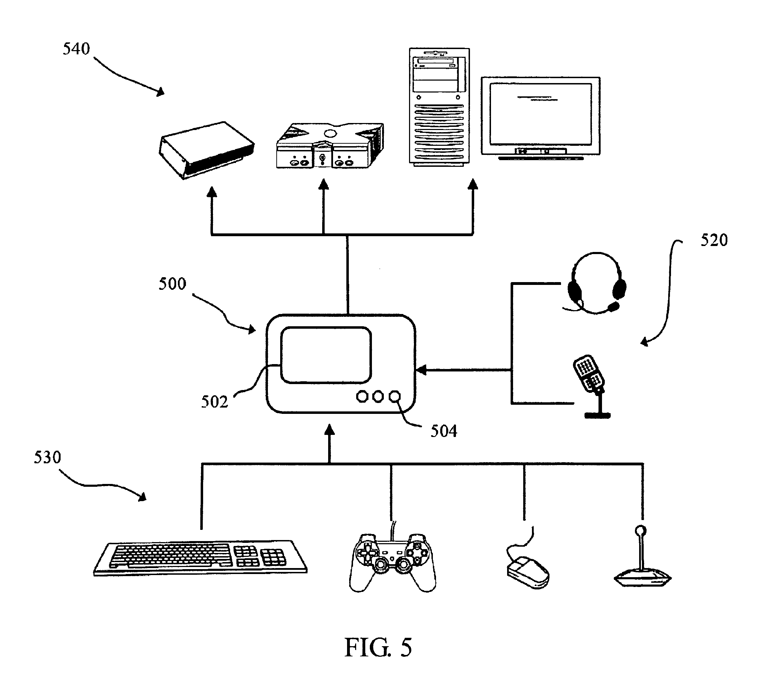

Referring to FIG. 5, which is a schematic view of the voice command game controlling apparatus in the embodiment of present invention. As showed in figure, voice command game controlling apparatus is originally designed to receive the voice command from external voice acquisition devices 520, such as microphone or throat mic and receive the game command signals from external game controlling devices 530 such as keyboard, gamepad, mouse or joystick. The configured and registered command signal is compatible with current all kind of game platform, such as PC, PS3, XBOX 360 or Wii. The voice command game controlling apparatus may be optionally provided with a displayer 502 and status lamp 504, which can indicate the information in hot key setting and device's operation mode. Note that the voice command game controlling apparatus may also build-in in current game platform to allow the voice command function and voice hotkey editing.

While the embodiments of the present invention disclosed herein are presently considered to be preferred embodiments, various changes and modifications can be made without departing from the spirit and scope of the present invention. The scope of the invention is indicated in the appended claims, and all changes that come within the meaning and range of equivalents are intended to be embraced therein.

## Claims

1. A device for utilizing voice command to implement hot key function, comprising:
acquisition devices to acquire external voice signal;
a processing unit coupled with said acquisition devices to process voice signal;
at least one input devices coupled to said processing unit to input game command;
a plurality of input terminal to connect with said at least one input devices to receive said game command; and
a command registration unit coupled with a game device to save and register said inputted voice command and encoded game command;

2. The device of claim 1, further comprises a determination unit coupled with said processing unit to identify the similarity of acquired voice signal and registered voice signal.

3. The device of claim 1, further comprises display devices coupled with said processing unit to display hot key information saved in said command registration unit.

4. The device of claim 1, further comprises a voice recognition engine to recognize the inputted voice signals and convert them into characters.

5. The device of claim 1, further comprises a plurality of output terminal to output said hot key command to multiple game platforms.

6. The device of claim 1, further comprises an audio signal line-out to transmit said inputted voice signal directly to game platform.

7. The device of claim 1, further comprises an I/O port to input the hotkey file from external device or output the hotkey thereto.

8. The device of claim 7, wherein said hotkey file includes corresponding game platforms, hot key profiles, hot key columns, registered voice command and registered key combination of game command.

9. The device of claim 1, wherein the hot key information registered in said command registration includes corresponding game platforms, hot key profiles, hot key columns, registered voice command and registered key combination of game command.

10. The device of claim 1, wherein said acquisition devices include microphone and throat mic said input devices include keyboard, gamepad, mouse and joystick.

11. The device of claim 1, wherein said device can be built-in in game platform.

12. A method for utilizing voice command to implement hot key function, comprising the step of:
registering a voice command in a command registration unit;
inputting a desired key combination or game command corresponding to said voice command;
saving hot key setting in said command registration unit;
uttering a desired voice command by a user; and
identifying said desired voice command uttered by said user and compared with said registered voice command, if said voice command uttered by said user matches said registered voice command, executing said desired key combination or game command corresponding to said voice command; otherwise, ignoring and aborting
said voice command uttered by said user.

13. The method of claim 12, wherein user uses acquisition devices to utter voice signal.

14. The method of claim 12, wherein user can use multiple input devices to input said desired key combination or game command.

15. The method of claim 14, wherein said multiple input devices include keyboard, gamepad, mouse and joystick.
